# EUROPÄISCHE PATENTSCHRIFT

(11) **EP 1 326 553 B1**
(45) Veröffentlichungstag und Bekanntmachung des Hinweises auf die Patenterteilung: **26.05.2004**
(21) Anmeldenummer: 01987647.3
(22) Anmeldetag: 15.10.2001
(51) Int. Cl.: A61C 17/34, A61C 17/22

(54) **ELEKTRISCHE ZAHNBÜRSTE**
ELECTRICAL TOOTHBRUSH
BROSSE A DENTS ELECTRIQUE

(30) Priorität: 16.10.2000 DE 10051256; 12.02.2001 DE 10106665; 21.02.2001 DE 10108373
(43) Veröffentlichungstag der Anmeldung: 16.07.2003
(73) Patentinhaber: GIMELLI PRODUKTIONS AG, CH-3052 Zollikofen (CH)
(72) Erfinder: SCHÜTZ, Alfred, CH-3052 Zollikofen (CH)
(74) Vertreter: Hebing, Norbert
(86) Internationale Anmeldenummer: PCT/EP2001/011898
(87) Internationale Veröffentlichungsnummer: WO 2002/032342

(56) Entgegenhaltungen:
- DE-A- 19 927 297
- DE-U- 29 914 615
- US-A- 5 617 603

## Beschreibung

Die Erfindung bezieht sich auf eine elektrische Zahnbürste mit einer in einem Bürstengehäuse umlaufenden Zahnbürstenwelle und einer Borstenträgerscheibe, die über ein Getriebe miteinander verbunden sind, durch das die umlaufende Drehbewegung der Zahnbürstenwelle in eine pendelnde Drehbewegung der Borstenträgerscheibe umgewandelt wird, wobei die Zahnbürstenwelle an ihrem der drehbar gelagerten Borstenträgerscheibe zugewandten Ende einen Exzenter hat, der in einem von zwei Anlageflächen begrenzten Spalt der Borstenträgerscheibe eingreift.

Eine solche Zahnbürste ist aus der WO 96/37164 bekannt. Der Spalt wird von einer Nut in der Borstenträgerscheibe und der Exzenter von einer zweifachen Abkröpfung des Endes der Zahnbürstenwelle gebildet. Das freie Ende der Abkröpfung muss dabei zum Mittelpunkt der Borstenträgerscheibe gerichtet sein, damit der Exzenter in der Nut in allen Winkellagen spielfrei arbeitet. Um bei der bekannten Zahnbürste eine ausreichende Verschleißfestigkeit und die gewünschte Spielfreiheit und zugleich geringe Reibung zu erreichen, ist es erforderlich, dass die Zahnbürstenwelle als Metallteil ausgebildet wird, wodurch sich die Herstellung der elektrischen Zahnbürste stark verteuert.

Der Erfindung liegt das Problem zugrunde, eine elektrische Zahnbürste der eingangs genannten Art so auszubilden, dass möglichst alle ihre Teile kostengünstig als Spritzgießteile erzeugt werden können.

Dieses Problem wird erfindungsgemäß dadurch gelöst, dass der Exzenter von einer auf der Zahnbürstenwelle angeordneten Exzenterscheibe gebildet ist, die in jeder Winkellage eine den Spalt überbrückende Ausdehnung aufweist.

Durch diese Gestaltung können die Zahnbürstenwelle mit der Exzenterscheibe als einfache Spritzgießteile oder sogar einstückig als ein einziges Spritzgießteil ausgebildet werden. Dabei kann mit üblichen Fertigungsgenauigkeiten eine ausreichende Spielfreiheit verwirklicht werden, weil die Exzenterscheibe, abgesehen von ihrer erforderlichen Exzentrizität, nicht zur Mitte der Borstenträgerscheibe hin ausgerichtet sein muss. Weiterhin kann man bei zweiteiliger Ausbildung der Zahnbürstenwelle und der Exzenterscheibe durch unterschiedliche Exzenterscheiben unterschiedliche Schwenkwinkel der Borstenträgerscheibe erreichen.

Eine besonders einfache Ausführung besteht darin, dass die beiden Anlageflächen parallel zueinander verlaufen und gegen den Exzenter anliegen und dass der Exzenter als unrunde, in etwa elliptische Exzenterscheibe ausgebildet ist. Durch diese Ausformung wird erreicht, dass während der Pendelbewegung der sich in der Projektion ändernde Abstand der beiden Anlageflächen ausgeglichen wird.

Besonders spielarm und reibungsarm arbeitet die Zahnbürste, wenn die Anlageflächen zur Mantelfläche des Exzenters hin konvex gekrümmt verlaufen. Damit wird erreicht, dass die Anlagefläche stets tangential zur Mantelfläche der Exzenterscheibe verläuft.

Weitere Ausgestaltungen des Erfindungsgedanken ergeben sich aus den Unteransprüchen. Ganz besonders vorteilhaft ist es jedoch, wenn die Exzenterscheibe eine umlaufende, schräg zu der Exzenterscheibe verlaufende Wendelnut mit einem Nutgrund hat, welcher den Exzenter bildet und der den Spalt zwischen den beiden Mitnehmerstiften überbrückt. Durch diese Ausgestaltung ergibt sich statt einer punktförmigen Berührung eine linienförmige Berührung der Mitnehmerstifte mit der Exzenterscheibe, wodurch es zu einer erheblichen Verschleißminderung kommt.

Bei den zuvor beschriebenen Ausführungsformen greift eine Exzenterscheibe an einer Seite der Drehachse der Borstenträgerscheibe in einen Schlitz dieser Borstenträgerscheibe. Ein symmetrischer und deshalb momentfreier Kraftangriff lässt sich gemäß einer Weiterbildung der Erfindung erreichen, wenn die Borstenträgerscheibe symmetrisch und diametral zu ihrer Drehachse jeweils einen Spalt aufweist und die Zahnbürstenwelle entsprechend zwei entgegengesetzt ausgerichtete Exzenterscheiben hat, von denen jeweils eine Exzenterscheibe in eine der Spalten greift. Hierdurch kommt es zu einer ruhigeren Schwingbewegung der Borstenträgerscheibe. Weiterhin werden axial gerichtete Kräfte auf der Zahnbürstenwelle vermieden.

Konstruktiv besonders einfach ist die elektrische Zahnbürste gestaltet, wenn die Borstenträgerscheibe mit ihrer Mantelfläche in dem Zylinder drehbar gelagert und die Zahnbürstenwelle unterhalb der Borstenträgerscheibe zu einem Lager im Bürstenkopf an der Seite des freien Endes des Bürstengehäuses führt. Eine solche Ausführungsform ist im Vergleich zu den zuvor beschriebenen Ausführungsformen besonders kostengünstig herstellbar.

Dank der Erfindung wird es auch möglich, Gruppen von Borsten des Bürstenteils eine unterschiedliche Bewegung aufzuzwingen, indem konzentrisch in der Borstenträgerscheibe eine weitere Borstenträgerscheibe drehbar gelagert ist, welche ebenfalls einen Ansatz hat, der gegenüberliegend jeweils einen Spalt aufweist, in den entsprechend der Exzenterscheiben für die äußere Borstenträgerscheibe ebenfalls jeweils eine Exzenterscheibe der Zahnbürstenwelle greift, so dass die Zahnbürstenwelle insgesamt vier Exzenterscheiben aufweist.

Die Erfindung lässt verschiedene Ausführungsformen zu. Mehrere davon sind in der Zeichnung dargestellt und werden nachfolgend beschrieben. In ihr zeigen die
- Fig.1: ein Bürstengehäuse mit einem Bürstenkopf einer Zahnbürste in Explosionsdarstellung,
- Fig.2: die Bauelemente aus Fig. 1 in einer Schnittdarstellung,
- Fig.3: eine perspektivische Darstellung des Getriebes zwischen der Zahnbürstenwelle und dem Bürstenkopf,
- Fig.4: einen Schnitt durch das Getriebe, wobei sich der Bürstenkopf in der Mittellage der Pendelbahn befindet,
- Fig.5: einen Schnitt durch das Getriebe, wobei der Bürstenkopf gegenüber der Mittellage verdreht ist,
- Fig.6: eine perspektivische Darstellung einer zweiten Ausführungsform der Zahnbürste im Bereich ihrer Zahnbürstenwelle,
- Fig.7: eine perspektivische Darstellung des Bürstengehäuses mit darin montierten Bauteilen gemäß der zweiten Ausführungsform der Erfindung,
- Fig.8: einen Längsschnitt durch den Bereich des Bürstenkopfes einer weiteren Ausführungsform der Erfindung,
- Fig.9: die Anordnung nach Figur 8 in einer perspektivischen Explosionsdarstellung,
- Fig.10: eine perspektivische Darstellung der Borstenträgerscheibe nach den Figuren 8 und 9,
- Fig.11: einen Längsschnitt durch den Bereich des Bürstenkopfes einer weiteren Ausführungsform der Erfindung,
- Fig.12: die Anordnung nach Figur 11 in einer perspektivischen Explosionsdarstellung.

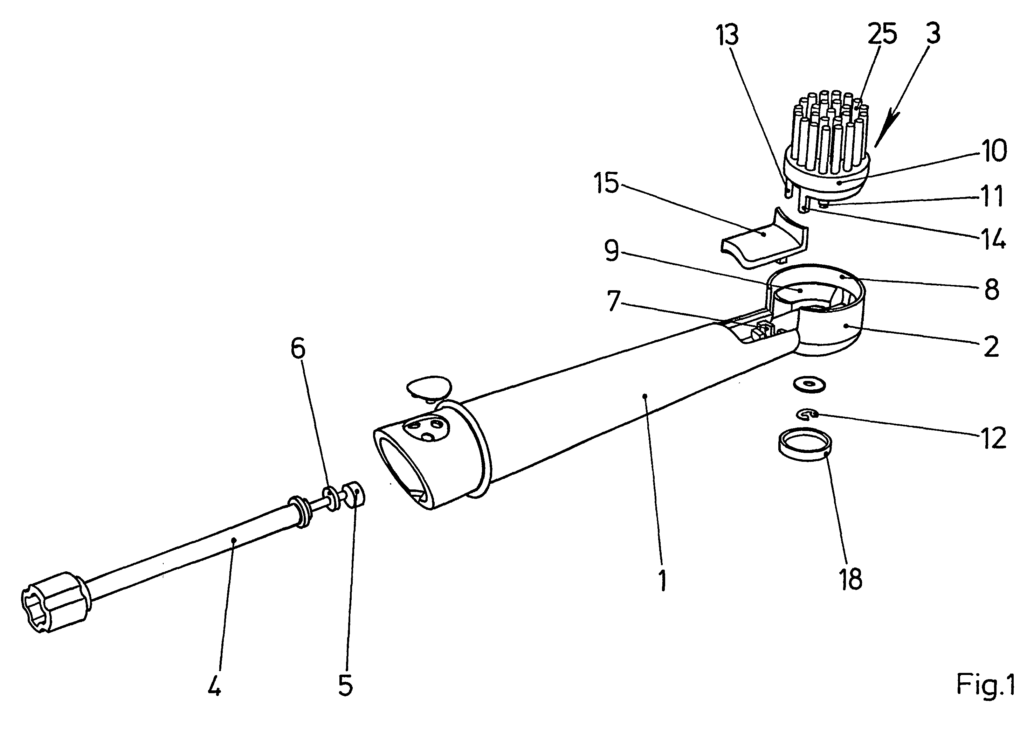

Die Figur 1 zeigt von einer elektrischen Zahnbürste ein Bürstengehäuse 1 einer Aufsteckbürste. Das Bürstengehäuse 1 ist als langgestreckter Hohlzylinder ausgebildet, welches mit seinem einen Ende mit einem nicht dargestellten Handteil der elektrischen Zahnbürste verbindbar ist und das mit seinem anderen Ende in einen topfförmigen Bürstenkopf 2 für ein Bürstenteil 3 übergeht. Im Bürstengehäuse 1 ist eine Zahnbürstenwelle 4 gelagert, die an ihrem einen Ende mit einem Motor im Handteil der Zahnbürste koppelbar ist und an ihrem anderen Ende eine Exzenterscheibe 5 trägt, deren genaue Form weiter unten näher beschrieben wird. Hinter der Exzenterscheibe 5 befindet sich auf der Zahnbürstenwelle 4 ein Bund 6, der in einer Lagerschale 7 des Bürstengehäuses 1 gehalten ist.

Der Bürstenkopf 2 hat einen nach oben hin offenen Zylinder 8, der nach unten hin teilweise durch einen Boden 9 geschlossen ist. Das Bürstenteil 3 hat Borsten 25, welche in einer Borstenträgerscheibe 10 verankert sind. Die Borstenträgerscheibe 10 ist im montierten Zustand in dem Zylinder 8 drehbar gehalten. Ein Lagerzapfen 11 durchdringt den Boden 9 und ist von außen durch einen Sicherungsring 12 fixiert.

Von der Borstenträgerscheibe 10 ragen zwei Mitnehmerstifte 13, 14 nach unten. Sie verlaufen parallel aber im Abstand zu dem Lagerzapfen 11. Entsprechend dem Schwenkwinkel der Borstenträgerscheibe 10 ist im Boden 9 ein Winkelbereich freigelassen.

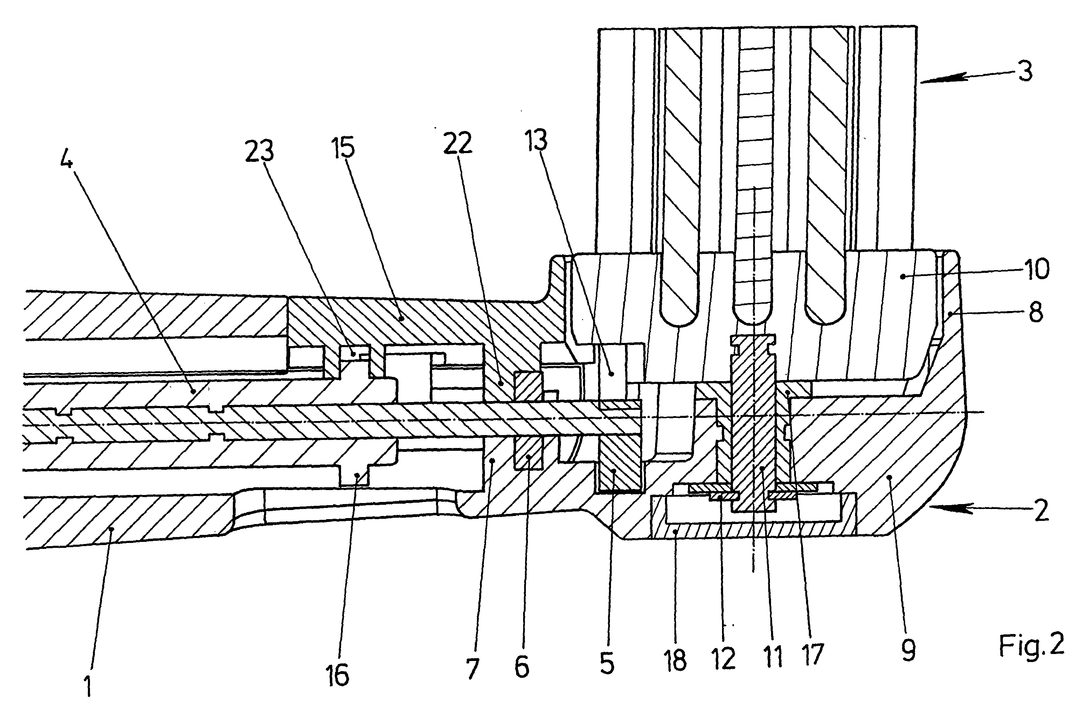

Ein Teil des Zylinders 8 und des Bürstengehäuses 1 sind freigeschnitten und werden von einem Deckel 15 verschlossen, der die Freischnitte vollständig abdeckt und dessen Bedeutung sich insbesondere aufgrund der nachfolgenden Beschreibung der Figur 2 ergibt.

In Fig. 2 ist ein vorderer Bereich der montierten Aufsteckbürste im Längsschnitt dargestellt. Die Zahnbürstenwelle 4 wird von der Aufsteckseite her in das Bürstengehäuse 1 eingeführt. Da dabei der Deckel 15 noch nicht geschlossen ist, kann der Bund 6 unmittelbar hinter der Exzenterscheibe 5 in die Lagerschale 7 eingelegt werden. Der Deckel 15 hat eine Schulter 22, die oberhalb der Lagerschale 7 über die Zahnbürstenwelle 4 greift und diese dadurch in der gezeigten Position fixiert.

Weiter entfernt vom Bürstenkopf 2 hat die Zahnbürstenwelle 4 einen Bund 16, über den der Deckel 15 mit einer Nut 23 greift und dadurch die Zahnbürstenwelle 4 zusätzlich in Axialrichtung fixiert. Die Exzenterscheibe 5 selbst befindet sich in dem Bürstenkopf 2 für das Bürstenteil 3. Nach Montage der Borstenträgerscheibe 10 greifen die Mitnehmerstifte 13, 14, von denen in Figur 2 nur der Mitnehmerstift 13 zu sehen ist, an gegenüberliegenden Seiten über die Exzenterscheibe 5. Der Lagerzapfen 11 durchdringt eine in den Boden 9 eingesetzte Lagerhülse 17 und wird von einem Sicherungsring 12 gehalten, der in einer Ausnehmung an der Außenseite des Bodens 9 liegt, die von einer Kappe 18 verschlossen ist. Der Zusammenbau wird durch Schließen des Bürstengehäuses 1 mittels des Deckels 15 abgeschlossen.

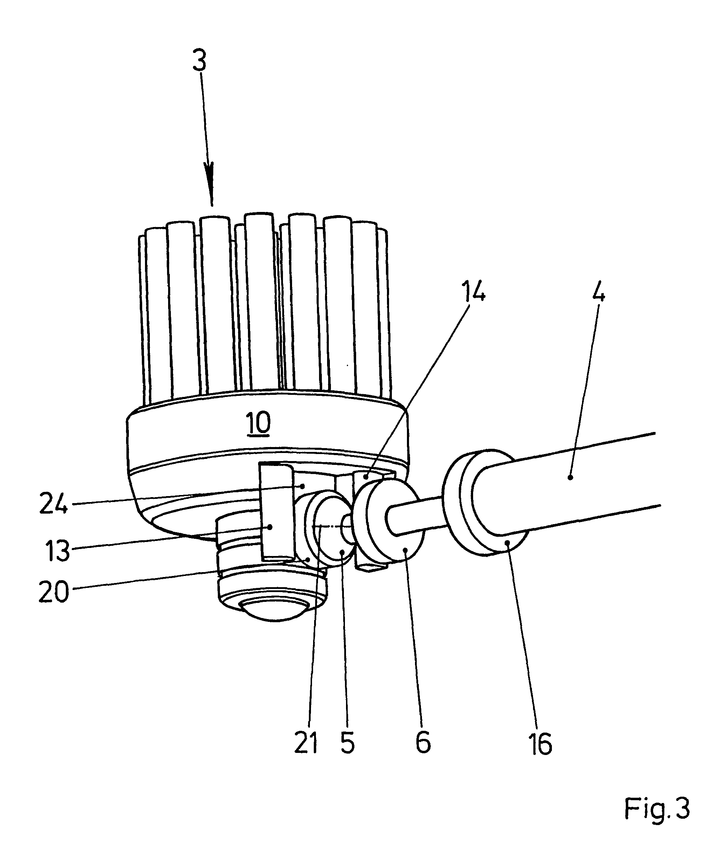

Fig. 3 zeigt insbesondere das Getriebe, gebildet aus der Exzenterscheibe 5 am Ende der Zahnbürstenwelle 4 und den beiden Mitnehmerstiften 13, 14 der Borstenträgerscheibe 10. Man erkennt, dass die Exzenterscheibe 5 extrem exzentrisch an der Zahnbürstenwelle 4 befestigt ist, wobei die Exzentrizität den Winkelbereich bestimmt, den die Borstenträgerscheibe 10 beim Hin- und Herschwenken überstreicht. Entscheidend ist, dass die Exzenterscheibe 5 stets einen Spalt 24 zwischen den Mitnehmerstiften 13, 14 weitgehend spielfrei überbrückt, so dass der Übergang von der einen in die andere Bewegungsrichtung spielfrei und ruckfrei erfolgt.

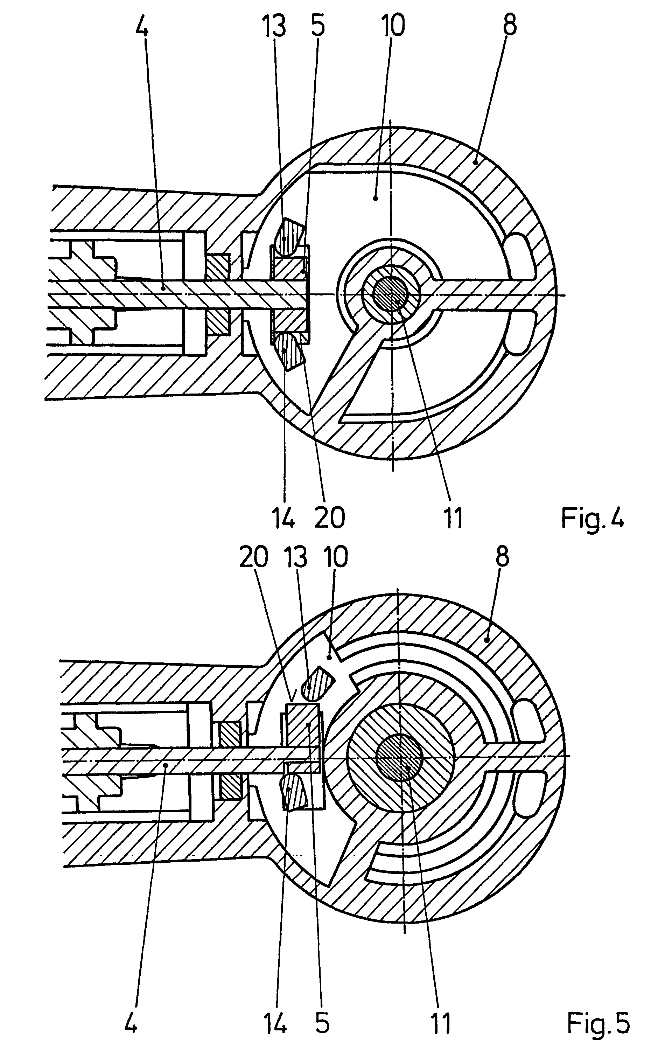

Da die Mitnehmerstifte 13, 14 sich auf Kreisbahnen um den Lagerzapfen 11 bewegen, sind einige Besonderheiten zu berücksichtigen: Zunächst einmal ändert sich die Ausrichtung der Mitnehmerstifte 13, 14 in Bezug zur Mantelfläche 20 der Exzenterscheibe 5, was deutlich durch Vergleich der Figuren 4 und 5 zu erkennen ist. Je entfernter sich die Mitnehmerstifte 13, 14 von der Zahnbürstenwelle 4 befinden, desto schräger stehen sie auf der Mantelfläche 20. Daher sind die die Anlageflächen bildenden Seiten der Mitnehmerstifte 13, 14 bogenförmig ausgeführt, so dass die Mantelfläche 20 stets tangential zur jeweiligen Anlagefläche verläuft. Außerdem bewegen sie sich im Bezug zur Exzenterscheibe 5 vor und zurück. Deswegen besitzt die Exzenterscheibe 5 ein gewisse Dicke und damit ihre Mantelfläche 20 eine gewisse Längsausdehnung.

Weiterhin ist zu beachten, dass der Abstand zwischen den Mitnehmerstiften 13, 14 in Blickrichtung parallel zur Zahnbürstenwelle 4 sich mit der Winkellage der Borstenträgerscheibe 10 ändert. Dies hat Konsequenzen hinsichtlich der Außenkontur der Exzenterscheibe: Fig. 4 zeigt den Schnitt durch die im Prinzip kreisförmige Exzenterscheibe 5, wenn sich ihre in Figur 3 eingezeichnete Hauptlinie 21, die Verbindung zwischen ihrem Mittelpunkt und der von der Zahnbürstenwelle 4 bestimmten Drehachse, parallel zu den Mitnehmerstiften 13, 14 befindet. Die Ausdehnung der Exzenterscheibe 5 zu beiden Seiten der Hauptlinie 21 ist gleich. Damit befindet sich die Borstenträgerscheibe 10 in ihrer Mittellage. Der Durchmesser der Exzenterscheibe 5 senkrecht zur Hauptlinie 21 wird als der Hauptkreisdurchmesser bezeichnet.

Nach einer Drehung um 90° liegt die Hauptlinie 21 senkrecht zu den Mitnehmerstiften 13, 14 und damit die Borstenträgerscheibe 10 in einer extrem gedrehten Position zur Mittellage. Diese Situation ist in den Figuren 3 und 5 gezeigt. Der Abstand zwischen den Mitnehmerstiften 13, 14 hat sich in der von der Exzenterscheibe 5 gebildeten Projektionsebene verkleinert. Entsprechend kleiner muss auch der Durchmesser der Exzenterscheibe 5 in dieser Richtung sein. Dieser ist somit in der Hauptlinie kleiner als der oben definierte Hauptkreisdurchmesser. Der Übergang zwischen den Durchmessern erfolgt kontinuierlich, so dass die Exzenterscheibe 5 in etwa eine elliptisch Außenkontur erhält.

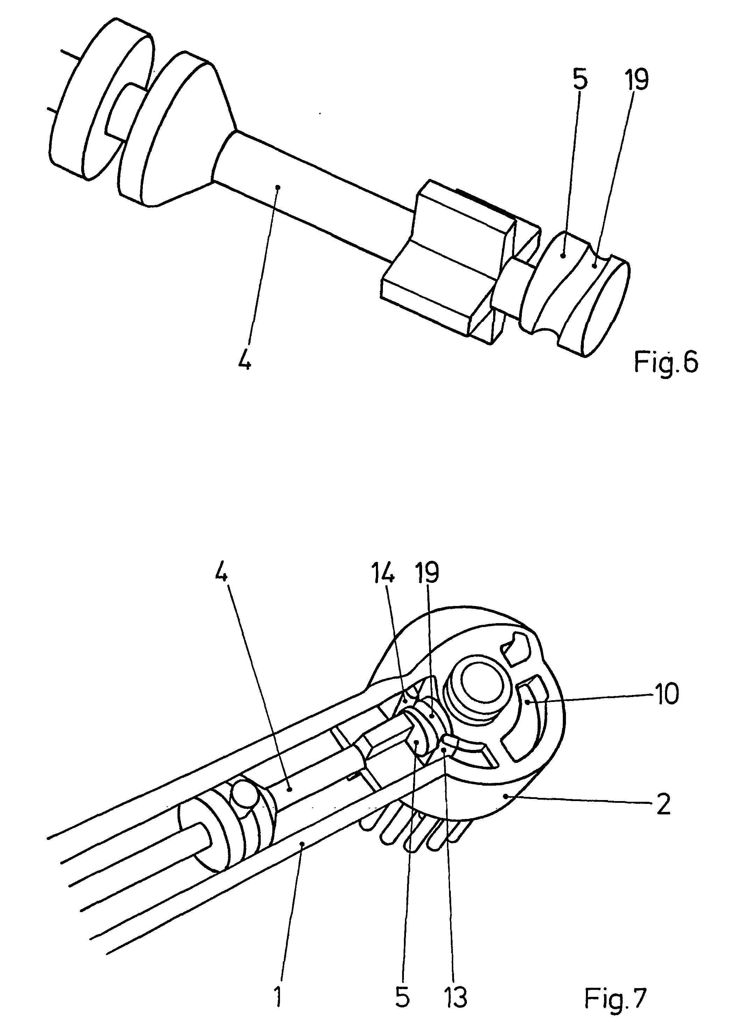

Bei der Ausführungsform nach den Figuren 6 und 7 ist in der Mantelfläche der Exzenterscheibe 5 eine schräg ausgerichtete, umlaufende Wendelnut 19 vorgesehen. Der Nutgrund dieser Wendelnut 19 bildet bei dieser Ausführungsform den Exzenter der Exzenterscheibe 5.

Die Figur 7 zeigt, dass die beiden Mitnehmerstifte 13, 14 der Borstenträgerscheibe 10 in diese Wendelnut 19 eingreifen. Deshalb bewirkt die umlaufende Drehbewegung der Zahnbürstenwelle 4 wiederum eine pendelnde Bewegung der Borstenträgerscheibe 10.

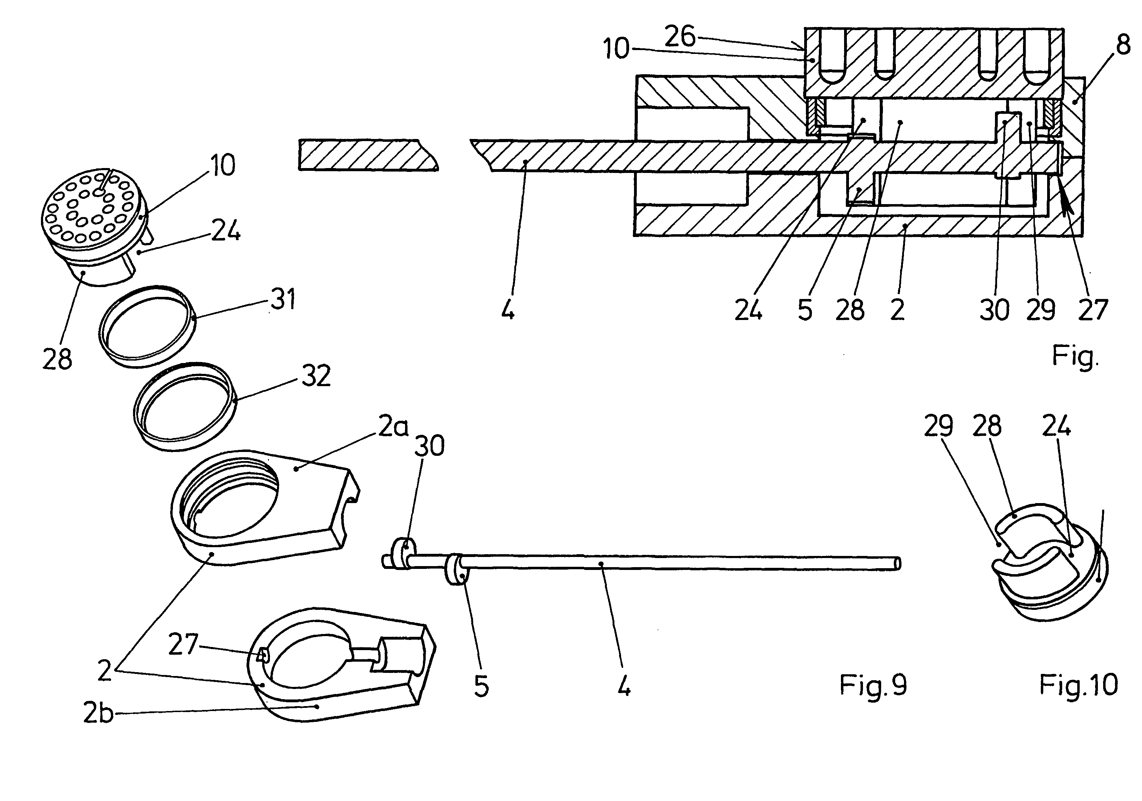

Bei der Ausführungsform nach Figur 8 ist die Borstenträgerscheibe 10 mit ihrer Mantelfläche 26 in dem Zylinder 8 des Bürstenkopfes 2 drehbar gelagert. Die Zahnbürstenwelle 4 führt unter der Borstenträgerscheibe 10 hindurch zu einem Lager 27 in der äußeren Seite des Bürstenkopfes 2. Die Borstenträgerscheibe 10 hat zur Seite der Zahnbürstenwelle 4 hin einen ringförmigen Ansatz 28, in welchem zusätzlich zu dem Spalt 24 an der gegenüberliegenden Seite ein Spalt 29 vorgesehen ist. Genau wie bei den zuvor beschriebenen Ausführungsformen greift die Zahnbürstenwelle 4 mit einer Exzenterscheibe 5 in den Spalt 24. Die Zahnbürstenwelle 4 hat jedoch nahe des Lagers 27 eine zweite Exzenterscheibe 30, die zur Exzenterscheibe 5 entgegengesetzt ausgerichtet ist und in den zweiten Spalt 29 greift.

Die perspektivische Explosionsdarstellung gemäß Figur 9 dient der zusätzlichen Verdeutlichung der Gestaltung der Ausführungsform nach Figur 8. Zu sehen ist die Zahnbürstenwelle 4 mit ihren beiden Exzenterscheiben 30 und 5. Weiterhin sieht man in Figur 9 die Borstenträgerscheibe 10 mit ihrem Ansatz 28 und dem Spalt 24, in welchem die Exzenterscheibe 5 greift. Der Bürstenkopf 2 besteht aus zwei Schalen 2a, 2b. In die obere Schale 2a werden zwei Ringe 31, 32 eingelegt, die die axiale Position der Borstenträgerscheibe 10 in dem Zylinder 8 des Bürstenkopfes 2 festlegen.

Die Einzelteildarstellung der Borstenträgerscheibe 10 gemäß Figur 10 lässt in dem Ansatz 28 der Borstenträgerscheibe 10 die beiden gegenüberliegenden Spalte 24, 29 erkennen, in welche jeweils eine der Exzenterscheiben 30, 5 eingreift.

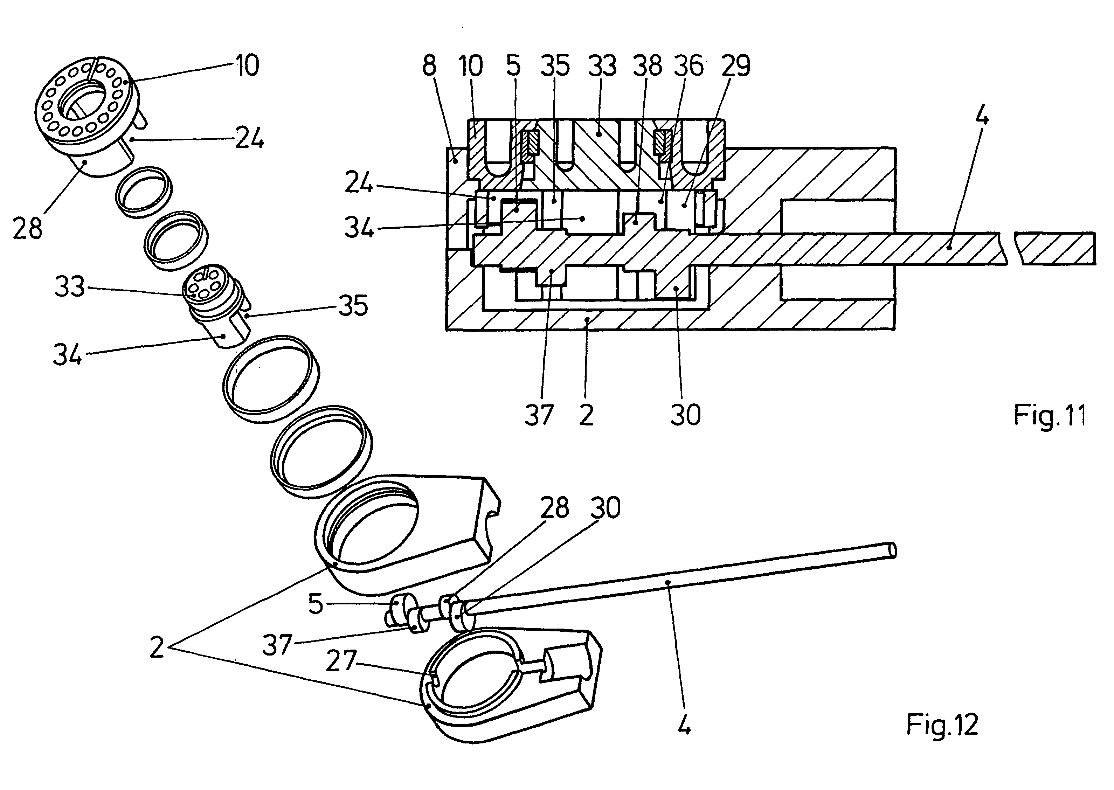

Bei der Ausführungsform nach Figur 11 ist konzentrisch in der Borstenträgerscheibe 10 eine weitere Borstenträgerscheibe 33 drehbar eingesetzt. Die äußere Borstenträgerscheibe 10 hat deshalb eine ringförmige Gestalt. Genau wie die äußere Borstenträgerscheibe 10 hat die innere Borstenträgerscheibe 33 einen Ansatz 34 mit zwei Spalten 35, 36, in die zur Erzeugung der pendelnden Bewegung jeweils eine Exzenterscheibe 37, 38 der Zahnbürstenwelle 4 greift. Die Zahnbürstenwelle 4 hat also bei dieser Ausführungsform insgesamt vier Exzenterscheiben 5, 37, 38, 30.

Die perspektivische Explosionsdarstellung gemäß Figur 12 zeigt die ringförmige Borstenträgerscheibe 10 mit ihrem Ansatz 28 und einem Spalt 24. Weiterhin sieht man die Borstenträgerscheibe 33 mit ihrem Ansatz 34 und einem Spalt 35. Genau wie in Figur 9 ist in Figur 12 wiederum die Zahnbürstenwelle 4 dargestellt, die hier jedoch die vier Exzenterscheiben 5, 27, 38, 30 hat. Ebenfalls zu sehen ist in Figur 12 eine Hälfte des Lagers 27, in welchem das freie Ende der Zahnbürstenwelle 4 im Bürstenkopf 2 gelagert wird.

### Bezugszeichenliste

- 1: Bürstengehäuse
- 2: Bürstenkopf
- 3: Bürstenteil
- 4: Zahnbürstenwelle
- 5: Exzenterscheibe

- 6: Bund
- 7: Lagerschale
- 8: Zylinder
- 9: Boden
- 10: Borstenträgerscheibe

- 11: Lagerzapfen
- 12: Sicherungsring
- 13: Mitnehmerstift
- 14: Mitnehmerstift
- 15: Deckel

- 16: Bund
- 17: Lagerhülse
- 18: Kappe
- 19: Wendelnut
- 20: Mantelfläche

- 21: Hauptlinie
- 22: Schulter
- 23: Nut
- 24: Spalt
- 25: Borsten

- 26: Mantelfläche
- 27: Lager
- 28: Ansatz
- 29: Spalt
- 30: Exzenterscheibe

- 31: Ring
- 32: Ring
- 33: Borstenträgerscheibe
- 34: Ansatz
- 35: Spalt

- 36: Spalt
- 37: Exzenterscheibe
- 38: Exzenterscheibe

## Patentansprüche

1. Elektrische Zahnbürste mit einer in einem Bürstengehäuse (1) umlaufenden Zahnbürstenwelle (4) und einer Borstenträgerscheibe (10), die über ein Getriebe miteinander verbunden sind, durch das die umlaufende Drehbewegung der Zahnbürstenwelle (4) in eine pendelnde Drehbewegung der Borstenträgerscheibe (10) umgewandelt wird, wobei die Zahnbürstenwelle (4) an ihrem der drehbar gelagerten Borstenträgerscheibe (10) zugewandten Ende einen Exzenter hat, der in einem von zwei Anlageflächen begrenzten Spalt der Borstenträgerscheibe (10) eingreift, **dadurch gekennzeichnet, dass** der Exzenter von einer auf der Zahnbürstenwelle (4) angeordneten Exzenterscheibe (5) gebildet ist, die in jeder Winkellage eine den Spalt (24) überbrückende Ausdehnung aufweist.

2. Elektrische Zahnbürste nach Anspruch 1, **dadurch gekennzeichnet, dass** die beiden Anlageflächen parallel zueinander verlaufen und gegen den Exzenter anliegen und dass der Exzenter als unrunde, in etwa elliptische Exzenterscheibe (5) ausgebildet ist.

3. Elektrische Zahnbürste nach den Ansprüchen 1 oder 2, **dadurch gekennzeichnet, dass** die Anlageflächen zur Mantelfläche (20) der Exzenterscheibe (5) hin konvex gekrümmt verlaufen.

4. Elektrische Zahnbürste nach einem der vorangehenden Ansprüche, **dadurch gekennzeichnet, dass** der Spalt (24) zwischen zwei von einer unteren Stirnfläche der Borstenträgerscheibe (10) vorspringenden Mitnehmerstiften (13, 14) gebildet ist und die Anlageflächen an diesen Mitnehmerstiften (13, 14) vorgesehen sind.

5. Elektrische Zahnbürste nach einem der vorangehenden Ansprüche, **dadurch gekennzeichnet, dass** die Zahnbürstenwelle (4) nahe ihrer Exzenterscheibe einen umlaufenden Bund (6) hat, der in eine Lagerschale (7) des Bürstengehäuses (1) eingreift.

6. Elektrische Zahnbürste nach Anspruch 5, **dadurch gekennzeichnet, dass** ein Abschnitt des Bürstengehäuses (1) von einem lösbar in eine Ausnehmung des Bürstengehäuses (1) eingesetzten Deckel (15) gebildet ist, welcher einen Teil der Lagerschale (7) bildet.

7. Elektrische Zahnbürste nach Anspruch 6, **dadurch gekennzeichnet, dass** der Deckel (15) außerdem einen Teilabschnitt einer Aufnahme (2) für die Borstenträgerscheibe (10) bildet.

8. Elektrische Zahnbürste nach zumindest einem der vorangehenden Ansprüche, **dadurch gekennzeichnet, dass** die Exzenterscheibe (5) eine umlaufende, schräg zu der Exzenterscheibe (5) verlaufende Wendelnut (19) mit einem Nutgrund hat, welcher den Exzenter bildet, der den Spalt (24) zwischen den beiden Mitnehmerstiften (13, 14) überbrückt.

9. Elektrische Zahnbürste nach zumindest einem der vorangehenden Ansprüche, **dadurch gekennzeichnet, dass** die Borstenträgerscheibe (10) symmetrisch und diametral zu ihrer Drehachse jeweils einen Spalt (24, 29) aufweist und die Zahnbürstenwelle (4) entsprechend zwei entgegengesetzt ausgerichtete Exzenterscheiben (5, 30) hat, von denen jeweils eine Exzenterscheibe (5, 30) in einem der Spalte (24, 29) greift.

10. Elektrische Zahnbürste nach Anspruch 9, **dadurch gekennzeichnet, dass** die Borstenträgerscheibe (10) mit ihrer Mantelfläche (26) in dem Zylinder (8) drehbar gelagert und die Zahnbürstenwelle (4) unterhalb der Borstenträgerscheibe (10) zu einem Lager (27) im Bürstenkopf (2) an der Seite des freien Endes des Bürstengehäuses (1) führt.

11. Elektrische Zahnbürsten nach den Ansprüchen 9 oder 10, **dadurch gekennzeichnet, dass** konzentrisch in der Borstenträgerscheibe (10) eine weitere Borstenträgerscheibe (33) drehbar gelagert ist, welche ebenfalls einen Ansatz (34) hat, der gegenüberliegend jeweils einen Spalt (35, 36) aufweist, in den entsprechend der Exzenterscheiben (5, 30) für die äußere Borstenträgerscheibe (10) ebenfalls jeweils eine Exzenterscheibe (37, 38) der Zahnbürstenwelle (4) greift, so dass die Zahnbürstenwelle (4) insgesamt vier Exzenterscheiben (5, 30; 37, 38) aufweist.

## Claims

1. Electric toothbrush with a toothbrush shaft (4) rotating inside a brush casing (1) and a bristle carrier disc (10) which are connected to each other by a gear converting the rotary motion of the toothbrush shaft (4) into a reciprocating rotary motion of the bristle carrier disc (10), the toothbrush shaft (4) having at its end turned towards the rotatably mounted bristle carrier disc (10) an eccentric engaging in a gap bounded by two bearing faces on the bristle carrier disc (10), **characterized in that** the eccentric is formed by an eccentric disc (5) arranged on the toothbrush shaft (4) and spanning the gap (24) in any angular position.

2. Electric toothbrush according to Claim 1, **characterized in that** the two bearing faces are parallel with each other and bear against the eccentric and **in that** the eccentric is configured as a non-circular, approximately elliptical, eccentric disc (5).

3. Electric toothbrush according to Claim 1 or Claim 2, **characterized in that** the bearing faces have a convex curvature towards the circumferential surface (20) of the eccentric disc (5).

4. Electric toothbrush according to any one of the preceding claims, **characterized in that** the gap (24) is formed between two drive pins (13, 14) projecting from a bottom end face of the bristle carrier disc (10), and the bearing faces are provided on these drive pins (13, 14).

5. Electric toothbrush according to any one of the preceding claims, **characterized in that** the toothbrush shaft (4) has, near to its eccentric disc, a rotating collar (6) which engages into a bearing shell (7) of the brush casing (1).

6. Electric toothbrush according to Claim 5, **characterized in that** a portion of the brush casing (1) is formed by a cover (15) removably inserted into a recess in the brush casing (1) and forming part of the bearing shell (7).

7. Electric toothbrush according to Claim 6, **characterized in that** the cover (15) also forms part of a seat (2) for the bristle carrier disc (10).

8. Electric toothbrush according to at least one of the preceding claims, **characterized in that** the eccentric disc (5) has a rotating helical groove (19) which is obliquely angled with respect to the eccentric disc (5) and the root of which forms the eccentric spanning the gap (24) between the two drive pins (13, 14).

9. Electric toothbrush according to at least one of the preceding claims, **characterized in that** the bristle carrier disc (10) has gaps (24, 29) on either side, arranged symmetrically and diametrically opposite about its rotational axis, and the toothbrush shaft (14) correspondingly has two eccentric discs (5, 30) orientated in opposite directions, each engaging in one of the gaps (24, 29).

10. Electric toothbrush according to Claim 9, **characterized in that** the bristle carrier disc (10) is rotatably mounted by its circumferential face (26) in the cylinder (8), and the toothbrush shaft (4) passes undemeath the bristle carrier disc (10) to a bearing (27) in the brush head (2) on the same side as the free end of the brush casing (1).

11. Electric toothbrushes according to Claim 9 or Claim 10, **characterized in that** a further bristle carrier disc (33) is rotatably mounted concentrically inside the bristle carrier disc (10), and likewise has a projection (34) with opposing gaps (35, 36) into each of which an eccentric disc (37, 38) on the toothbrush shaft (4) engages, in similar fashion to the eccentric discs (5, 30) for the outer bristle carrier disc (10), so that the toothbrush shaft (4) has altogether four eccentric discs (5, 30; 37, 38).

## Revendications

1. Brosse à dents électrique avec un arbre de brosse à dents (4) tournant dans un boîtier de brosse (1) et un disque support de poils (10) qui sont reliés entre eux par l'intermédiaire d'un engrenage, par lequel le mouvement de rotation rotatif de l'arbre de brosse à dents (4) est transformé en un mouvement de rotation oscillant du disque support de poils (10), l'arbre de brosse à dents (4) comportant, à son extrémité tournée vers le disque support de poils (10) monté de manière à pouvoir tourner, un excentrique qui s'engage dans une encoche du disque support de poils (10) limitée par deux surfaces de contact, **caractérisée en ce que** l'excentrique est formé par un disque d'excentrique (5) qui est disposé sur l'arbre de brosse à dents (4) et qui présente dans chaque position angulaire une extension surmontant l'encoche (24).

2. Brosse à dents électrique selon la revendication 1, **caractérisée en ce que** les deux surfaces de contact sont parallèles entre elles et s'appuient contre l'excentrique et **en ce que** l'excentrique est conçu comme un disque d'excentrique (5) ovale à peu près elliptique.

3. Brosse à dents électrique selon la revendication 1 ou 2, **caractérisée en ce que** les surfaces de contact s'étendent de manière convexe vers la surface latérale (20) du disque d'excentrique (5).

4. Brosse à dents électrique selon l'une des revendications précédentes, **caractérisée en ce que** l'encoche (24) est formée entre deux doigts d'entraînement (13, 14) faisant saillie d'une surface frontale inférieure du disque support de poils (10) et que les surfaces de contact sont prévues sur ces doigts d'entraînement (13, 14).

5. Brosse à dents électrique selon l'une quelconque des revendications précédentes, **caractérisée en ce que** l'arbre de brosse à dents (4) comporte, à proximité de son disque d'excentrique, un collet (6) circulaire qui s'engage dans un coussinet de palier (7) du boîtier de brosse (1).

6. Brosse à dents électrique selon la revendication 5, **caractérisée en ce qu'**un segment du boîtier de brosse (1) est formé par un couvercle (15) inséré de manière séparable dans un évidement du boîtier de brosse (1) et formant une partie du coussinet de palier (7).

7. Brosse à dents électrique selon la revendication 6, **caractérisée en ce que** le couvercle (15) forme, en outre, un segment partiel d'un logement (2) pour le disque support de poils (10).

8. Brosse à dents électrique selon au moins l'une quelconque des revendications précédentes, **caractérisée en ce que** le disque d'excentrique (5) a une rainure hélicoïdale circulaire, s'étendant à l'oblique par rapport au disque d'excentrique (5), avec un fond de rainure qui forme l'excentrique qui surmonte l'encoche (24) entre les deux doigts d'entraînement (13, 14).

9. Brosse à dents électrique selon au moins l'une quelconque des revendications précédentes, **caractérisée en ce que** le disque support de poils (10) présente, de manière symétrique et diamétralement opposée par rapport à son axe de rotation, une encoche (24, 29) et l'arbre de brosse à dents (4) présente, de manière correspondante, deux disques d'excentrique (5, 30) orientés de manière opposée, dont chacun des disques d'excentrique (5, 30) s'engage dans l'une des encoches (24, 29).

10. Brosse à dents électrique selon la revendication 9, **caractérisée en ce que** le disque support de poils (10) avec sa surface latérale (26) est monté de manière à pouvoir tourner dans le cylindre (8) et l'arbre de brosse à dents (4) conduit, au-dessous du disque support de poils (10), à un palier (27) dans la tête de brosse (2) sur le côté de l'extrémité libre du boîtier de brosse (1).

11. Brosses à dents électriques selon la revendication 9 ou 10, **caractérisées en ce qu'**un autre disque support de poils (33) est monté concentriquement et de manière à pouvoir tourner dans le disque support de poils (10), ledit autre disque support de poils ayant également un prolongement (34) qui présente deux encoches opposées (35, 36) dans chacune desquelles s'engage également un disque d'excentrique (37, 38) de l'arbre de brosse à dents (4), de manière correspondant aux disques d'excentrique (5, 30) pour le disque support de poils (10), de sorte que l'arbre de brosse à dents (4) présente au total quatre disques d'excentrique (5, 30 ; 37, 38).
